# EUROPEAN PATENT SPECIFICATION

(11) **EP 3 387 181 B1**
(45) Date of publication and mention of the grant of the patent: **29.01.2020**
(21) Application number: 16823029.0
(22) Date of filing: 09.12.2016
(51) Int. Cl.: D06M 11/155, D06M 11/17, D06M 11/22, D06M 11/46, D06M 11/57, D06M 11/76, D06M 11/83, D06M 13/352, D06M 13/355, D06M 15/227, D06M 15/263, D06M 15/327, D06M 15/333, D06M 15/564, D06M 16/00

(54) **WINDOW BLIND FABRIC COATED WITH POLLEN DENATURATION COATING COMPOSITON**
MIT EINER POLLEN-DENATURIERENDE ZUSAMMENSETZUNG BESCHICHTETE JALOUSIE
STORE POUR FENÊTRE REVÊTU D'UNE COMPOSITION ANTI-POLLEN

(30) Priority: 10.12.2015 GB 201521774
(43) Date of publication of application: 17.10.2018
(73) Proprietor: Louver-Lite Limited, Hyde, Cheshire SK14 4BG (GB)
(72) Inventor: BIRTLES, Stephen, Cheshire SK7 6LT (GB)
(74) Representative: Bridle, Andrew Barry
(86) International application number: PCT/GB2016/053908
(87) International publication number: WO 2017/098280

(56) References cited:
- DATABASE WPI Week 201037 Thomson Scientific, London, GB; AN 2010-F66127 XP002768557, -& JP 2010 116450 A (YUKO YAKUHIN KOGYO KK) 27 May 2010 (2010-05-27)
- DATABASE WPI Week 201330 Thomson Scientific, London, GB; AN 2013-F62790 XP002768558, -& JP 2013 067901 A (JUKA LIFETEK KK) 18 April 2013 (2013-04-18)
- DATABASE WPI Week 200210 Thomson Scientific, London, GB; AN 2002-069910 XP002768559, -& JP 2001 269518 A (SEKISUI CHEM IND CO LTD) 2 October 2001 (2001-10-02)
- DATABASE WPI Week 201072 Thomson Scientific, London, GB; AN 2010-N08697 XP002768560, -& JP 2010 227758 A (TORAY IND INC) 14 October 2010 (2010-10-14)
- DATABASE WPI Week 201455 Thomson Scientific, London, GB; AN 2014-K88301 XP002768561, -& JP 2014 105411 A (SUMINOE TEXTILE CO LTD) 9 June 2014 (2014-06-09)

## Description

The present invention relates to a hypoallergenic coating composition suitable for a fabric, in particular a fabric for covering an architectural opening, fabrics coated with the coating composition and uses thereof.

The term allergy is used to describe an inappropriate damaging immune response which occurs in only a proportion of the population on encounter with what is usually a non-harmful substance such as pollen or food. Broadly-speaking, hypersensitivity reactions can either be antibody- or cell-mediated. According to Gell and Coombs (Gell, P.G.H. and Coombs, R.R.A. (1963) The Classification of Allergic Reactions Underlying Disease, in Clinical Aspects of Immunology, Blackwell Science), such reactions can be classified as *Type I -* IV, which tends to follow known clinical disease patterns.

Type I depends on an interaction between antigen and IgE antibody attached to mast cells. Eosinophils and a subset of T-cells (Th2 cells) are also involved. Antigens which stimulate this type of response are often termed as allergens. Clinical examples of a type I reaction include allergic rhinitis (hay fever), allergic asthma and some food reactions such as peanut hypersensitivity.

Type II is a cytotoxic reaction between tissue- or cell-bound antigen and IgM or IgG antibody and clinical situations where this occurs include immune cytopaenias such as autoimmune haemolytic anaemia and immune thrombocytopaenia as well as in transfusion reactions.

Type III is an immune-complex reaction between circulating antigen and IgG antibody with subsequent deposition in the walls of blood vessels, joints, kidneys and skin manifesting as serum sickness or, in the case of some inhaled antigens, extrinsic allergic alveolitis.

Type IV is a cellular immune response mediated by sensitised lymphocytes. Such a reaction causes the local response that occurs on intradermal tuberculin testing in TB-sensitised individuals and for the skin manifestations of contact hypersensitivity.

These reactions can also be distinguished on the basis of their timing after antigen challenge with Type I occurring within minutes, Type II and III developing only after antibody is produced and persisting for as long as the antigen remains and Type IV developing only a few days after antigen challenge and persisting until the antigen challenge is removed.

Considering the highly complex nature of the immune system, this classification of hypersensitivity reactions is a simplification and generally, different immune mechanisms act in concert with each other.

Most allergy is IgE-mediated and it is now widely accepted that the use of the term allergy is restricted to those reactions and diseases where this mechanism underlies the pathologic process. Allergic diseases are common and epidemiological studies conducted in several different countries show an increase in the prevalence in asthma and related disorders. Asthma, allergic rhinitis and eczema have trebled in the last 20 years (Allergy The Unmet Need, 2003 www.allergyuk.org/allergy-statistics/allergy-statistics). It is estimated that up to a quarter of the population in the UK has or is predisposed to the development of an allergic condition and the cost to the NHS is significant with approximately £1bn a year spent on asthma care alone (www.asthma.org.uk/asthma-facts-and-statistics).

Grass pollen is a common allergen, which affects sufferers at the specific times of the year when grass pollen is released (e.g., May to July in the UK). However, some people become allergic to tree or weed and shrub pollens, and will therefore be affected at different times of the year (e.g., February to June for trees in the UK; June to September for weeds in the UK). The patient who is allergic to tree, grass and weed pollens may suffer a very prolonged 'hay fever' season. Rhinitis which occurs for only part of the year in this way is called seasonal allergic rhinitis.

In response to exposure of an allergen the body's immune system overreacts and releases chemicals (mediators) which cause inflammation. Some of these mediators (e.g. histamine) work quickly, causing sneezing, itching and runny nose. The eyes may also be affected, with itching, redness and watering (allergic conjunctivitis). Other mediators, cause a blocked or stuffy nose and sinuses, which may lead to headache and difficulty sleeping.

Rhinitis is inflammation of the nose, which is recognised by symptoms such as sneezing, runny nose, blocked / stuffy nose, itching and 'post-nasal drip' (the sensation of mucus running down the back of the throat). It can occur in association with inflammation of the eyes or sinuses. Rhinitis can have several causes, such as infection, a reaction to medication, irritation by dusts, or allergy. Allergic rhinitis is caused when the body makes allergic antibodies (IgE) to an allergen such as a pollen. In people sensitive to these allergens, exposure causes the release of chemicals from cells in the nasal passages, eyes or airways. This results in inflammation and irritation to the lining of the eyes, nose and throat.

Rhinitis is often regarded as a trivial problem but studies have shown that it severely affects people's quality of life. It disturbs sleep, impairs daytime concentration and the ability to carry out tasks, causes people to miss work or school, and has been shown to affect children's school exam results. People who suffer rhinitis are at increased risk of developing asthma. Inflammation at the beginning of the airway (the nose) frequently affects the lower airways leading to the lungs, and this has led to the 'one airway' approach to treatment. Many asthmatics also suffer rhinitis and if their rhinitis is treated effectively, their asthma is better controlled which results in fewer A&E and hospital admissions.

Rhinitis can be managed by allergen avoidance. However, allergen avoidance is difficult for people with allergy to substances in the air, such as pollen. Pollen allergens are typical inhalant allergens, and more than 50 types of pollen are known as allergens. Tiny pollen spores are windborne and travel for miles on air currents. Currently the advice provided by charities dedicated to supporting allergy sufferers such as Allergy UK is to keep windows and doors shut to minimise pollen exposure. However, it will appreciated that keeping windows and doors shut has an impact upon indoor air quality.

Indoor air quality (IAQ) is a term which refers to the air quality within and around buildings and structures, especially as it relates to the health and comfort of building occupants. IAQ can be affected by gases (including carbon monoxide, radon, volatile organic compounds), particulates, microbial contaminants (mould, bacteria), or any mass or energy stressor that can induce adverse health conditions. Source control, filtration and the use of ventilation to dilute contaminants are the primary methods for improving indoor air quality in most buildings. One way of quantitatively ensuring the health of indoor air is by the frequency of effective turnover of interior air by replacement with outside air. In the UK, for example, classrooms are required to have 2.5 outdoor air changes per hour. The process of keeping windows and doors closed severely restricts ventilation and inhibits effective turnover of interior air by replacement with outside air.

JP2010 116450 discloses a coated curtain, the coating comprising a zirconium hydroxide pollen denaturing agent (with pH of the composition below 7), and zinc pyrithione or thiabendazole as anti-microbial, the coating further comprises a polymeric carrier.

JP 2013 067901 A discloses a coated fabric curtain. The coating comprises a tannic acid pollen denaturing agent, zinc pyrithione or thiabendazole as an anti-microbial agent, and urethane binder.

JP 2001269518 A discloses the coating of a polypropylene monofilament mesh of a screen door. The coating comprises tannic acid pollen denaturing agent, an antiseptic agent, and an acrylate copolymer. JP2010227758 A discloses a coating composition for fabrics, comprising tannic acid or catechin as pollen denaturing agent, acrylate or silicone binder. Antimicrobial agents may be added to the composition.

JP 2014 105411 A discloses a coated fabric curtain, the coating comprising a zirconium phosphate pollen denaturing agent, a zinc oxide anti-microbial agent and a urethane binder.

This invention seeks to facilitate the avoidance of airborne allergens (such as pollen, fungi, dust, mite body and faeces, insect body and faeces), suitably pollen allergens, in particular for occupants of a building without restricting ventilation.

According to a first aspect of the disclosure, there is provided a coating composition for fabrics, wherein the coating composition comprises a pollen denaturing agent, an anti-microbial agent and a polymeric carrier, wherein the pollen denaturing agent is different to the anti-microbial agent.

In this context, the term 'fabric' means any manufactured assembly of interlacing fibres, filaments and/or yarns having substantial surface (planar) area in relation to its thickness and adequate mechanical strength to give it a cohesive structure. The fabric is typically woven or knitted but may also be produced by non-woven processes such as braiding, felting and twisting. For the avoidance of doubt, the term also includes laces, meshes and nets.

The coating composition of the disclosure comprises a pollen denaturing agent.

A pollen denaturing agent is a chemical agent that reduces the allergenic nature of pollen allergens. Pollen denaturing agents are known. Known pollen denaturing agents broadly fall into distinct groups; organic (including cationic) and inorganic.

Organic pollen denaturing agents include phenolic compounds such polyphenols and phenylethanoids. These phenolic compounds may be found in natural extracts, e.g., tannic acid, epigallocathechin gallate, epigallocathechin and oleuropein.

Cationic pollen denaturing agents include quaternary ammonium salts, such as benzalkonium chloride and DDAC, and pyridinium salts, such as cetylpyridinium chloride and laurylpyridinium chloride.

Inorganic pollen denaturing agents include alkali earth metal compounds, such as CaCl₂, SrCl₂ and calcium panthenoate; rare earth metal compounds or complexes such as YCl₃, LaCl₃, CeCl₃, DyCl₃ and HoCl₃; and zirconium compounds or complexes.

Tannic acid, which is a polyphenol component extracted from plants, has been known in Chinese medicine since ancient times. It has diverse applications, and is widely used, for example, in food products, paper, ink and leather. Tannic acid is a component that is contained in many plants, but commercial tannic acid is usually extracted from any of the following plant part: Tara pods (Caesalpinia spinosa), gallnuts from Rhus semialata or Quercus infectoria, or Sicilian Sumac leaves (Rhus coriaria). The protein denaturing action of tannic acid is utilised in well-known applications such as leather tanning and brewing. Similarly, the protein denaturing action of tannic acid can be used to denature pollen allergens. Tannic acid is an excellent allergen denaturing agent because of its protein agglutinative action, and is a natural compound with an excellent material safety profile.

Certain cationic compounds are well known as bactericides. Bactericidal mode of action is varied, e.g., inhibition of DNA synthesis, destruction of the cell membrane, enzyme blocking, and inhibition of ergosterol synthesis. However, cationic compounds are known to be bactericides which mainly show a protein denaturing action and this protein denaturing action may similarly be exhibited in the use of cationic compounds as allergen denaturing agents. Compounds such as benzalkonium chloride, didecyldimethyl ammonium chloride, polyhexamethylene biguanide, and cetylpyridinium chloride, which are known as cationic bactericides, may function as allergen denaturing agents.

Certain inorganic metal compounds or complexes can be used as allergen denaturing agents. Whilst not bound by theory, it is thought that the metal salts chelate, for example, to the peptide bonds of proteins within allergens and thereby denature the allergen.

It is an advantage of inorganic metals compounds or complexes that they may be chemically, light and thermally stable and do not cause discolouration. Thus, the pollen denaturing agent is suitably an inorganic compound or complex. In the context of the present invention, the term "compound" includes salts.

Metal compounds or complexes for which allergen denaturing effects have been shown include:
i) Alkaline earth metals
   The second group elements are beryllium (Be), magnesium (Mg), calcium (Ca), strontium (Sr) and barium (Ba). Magnesium compounds, calcium compounds and strontium compounds have a protein solidification action, and for example, calcium chloride and magnesium chloride are used as bitterns in the production of tofu. Beryllium and barium are typically excluded owing to their toxic nature. Of these compounds, calcium compounds and strontium compounds demonstrate particular efficacy as allergen denaturing agents. Calcium compounds are commonly used materials, such as the watersoluble calcium compounds, calcium chloride and calcium pantothenate.
ii) Rare-earth metals
   Rare earth metal compounds or complexes contain one or more of 16 elements, namely scandium (Sc), yttrium (Y), lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb) and lutetium (Lu). Rare earth compounds and complexes are known to have an antibacterial action, a protein denaturing action and are effective in denaturing allergens. The allergen denaturing effect of rare earth metal compounds/complexes exhibits a trend that shows particular effectiveness for water soluble compounds/complexes which reduces with water insoluble compounds such as phosphates and hydroxides. Lanthanum compounds, cerium compounds and yttrium compounds are typically the most cost effective. Rare earth elements are not essential elements, but they do not have high toxicity and are not highly irritating.
iii) Zirconium compounds/complexes
   Zirconyl chloride (ZrOCl (OH)) is used as an antiperspirant owing to its denaturing action on proteins and is effective in denaturing allergens. In addition, such zirconium compounds are also used as tanning agents for leather, which makes use of an astringent action on proteins. Allergen denaturing effects have also been shown for compounds such as basic zirconium carbonate, zirconium hydroxide and zirconium acetate.
iv) Aluminium compounds
   Alum ((AlK(SO₄)₂·12H₂O) has long been known as an astringent. Not only alum, but also aluminium compounds such as aluminium sulphate and aluminium chloride have been shown to exhibit allergen denaturing effects.

The pollen denaturing agent is a basic zirconium carbonate compound such as ammonium zirconium carbonate, which is a commercially available basic zirconium compound.

In this context, the term 'carrier' means a substance, typically inert, which serves as a vehicle for the pollen denaturing agent.

The composition must be suitable for application to a fabric substrate. Thus, the carrier must be capable of being applied to the fabric and must be compatible with the fabric. The coating must allow the fabric to function in its desired application after coating.

The carrier is a polymer. For example, the polymer may be a vinyl acetate-based polymer, such as polyvinyl acetate (PVA) or vinyl acetate/ethylene copolymer (VAE), an acrylic polymer, a polyurethane polymer, a polyalkylene polymer or mixtures thereof.

The carrier may be in the form of an aqueous solution, dispersion or emulsion. An aqueous carrier is useful as organic carriers are more tightly regulated and controlled. Coating processes tend to use aqueous components where possible to avoid the health and safety issues relating to the storage, handling, use and disposal of organic compounds.

The coating composition further comprises an anti-microbial agent, the pollen denaturing agent being different from the anti-microbial agent, such as an anti-fungal agent and/or an anti-bacterial agent. For example the anti-microbial agent may include a zinc compound or complex, a silver compound or complex and/or a heterocyclic compound including nitrogen and sulphur heteroatoms. In an embodiment of the invention, the anti-microbial agent includes a zinc compound or complex. In a further embodiment of the invention, the anti-microbial agent includes a heterocyclic compound formed from a heterocycle core containing one or more nitrogen heteroatoms and a heterocyclic substituent containing one or more suphur heteroatoms. An example anti-microbial agent comprises Bis[1-Hydroxy-2(1H)-pyridinethionato-O,S]-T-4 zinc and 2-(4-thiazolyl)benzimidazole. In such an anti-microbial agent, the zinc compound comprises a pair of pyridine-based ligands in which the sulphur and oxygen atoms of the ligands are bound to the zinc. Suitably, the coating composition of the invention further comprises a tackifier. In this context, the term 'tackifier' means a chemical compound used to increase the tackiness, i.e the stickiness, of a surface. They are usually low-molecular weight compounds with high glass transition temperature and softening temperature above room temperature, providing them with suitable viscoelastic properties. Tackifiers are usually resins e.g. rosins and their derivatives; terpenes and modified terpenes; aliphatic, cycloaliphatic and aromatic resins; hydrogenated hydrocarbon resins and their mixtures; terpene-phenol resins. An example of a suitable tackifier is an aqueous polymer dispersion containing an acrylate and a saturated, highly branched C₁₀ monocarboxylic acid. A further example is a copolymer including a vinyl ester of a branched carboxylic acid (a so-called VeoVa vinyl ester) and a vinyl acetate.

It is an advantage of a coating composition comprising a pollen denaturing agent and a tackifier that the increased tackiness of the resultant coating causes airborne pollen spores to adhere to it, which increases the ability of the coating to trap and denature pollen allergens.

Suitably the resultant tackiness of the surface is sufficient to increase the adhesion of pollen spores to the coated surface without resulting in a sticky feel or fabric handle.

The coating composition may further comprise one or more additional functional additives, for example to improve fire retardant or UV resistant properties or to improve the mechanical properties or increase durability.

Suitably, the coating composition further comprises a fire retardant. The fire retardant may be an antimony-based fire retardant, such as a fire retardant comprising antimony(III) oxide (Sb₂O₃).

In an embodiment of the first aspect of the disclosure the coating composition is suitable for use with a window blind fabric.

According to a first aspect of the invention, there is provided a coated window blind fabric for covering an architectural opening comprising a fabric substrate which is coated with a pollen denaturing coating formed from the composition as defined anywhere herein in relation to the first aspect of the disclosure.

In this context, the term "coating" includes one or more layers.

In this context, the term 'coated fabric' means a material comprising a fabric substrate and at least one polymeric coating. The polymeric coating may form a continuous or discontinuous layer. Suitably, the polymeric coating may form a substantially continuous layer.

In an embodiment of the invention, the pollen denaturing coating is in the form of one or more substantially continuous polymeric layers.

The polymeric coating is typically applied in liquid form in a solvent or water base, which evaporates to leave the polymer. The coating may be applied to one or both surfaces. Depending upon the application method, the liquid may require thickening to prevent soaking through the fabric, or an anti-foaming agent to aid processing. The thickness of the coating, or amount of product applied is controlled. Bonding typically occurs either through the drying process (evaporation) or through a curing process, required to promote polymer crosslinking.

Polymers which may be used in the or each coating include vinyl acetate-based polymers, such as polyvinyl acetate (PVA) or vinyl acetate/ethylene copolymer (VAE), acrylic polymers, polyurethane polymers, polyalkylene polymers and mixtures thereof.

A skilled person will appreciate that the fabric substrate may comprise one or more pollen denaturing coatings.

Optionally, the fabric substrate may be coated with two or more layers. Thus the fabric substrate may comprise the pollen denaturing coating and a second polymeric coating.

In another embodiment, the fabric includes an intermediate coating which comprises a substantially continuous polymeric layer and the intermediate coating is located between the fabric substrate and an outer layer formed from the pollen denaturing coating.

The intermediate coating may be in the form of a substantially continuous layer and the outer layer comprising the pollen denaturing agent may also be substantially continuous.

Suitably, the pollen denaturing coating further comprises a tackifier. The tackifier may be as defined and described hereinbefore.

In this context, the "outer layer" means the layer which is the furthest of the layers from the fabric substrate. Thus, there may be more than one intermediate layer.

In another embodiment, there is provided a coated fabric for covering an architectural opening wherein the fabric substrate is coated on a first side with the pollen denaturing coating and is coated on a second side, which is opposite to the first side, with a second coating. The second coating may or may not be formed from the coating composition as defined in the first aspect of the invention, i.e. it may or may not include a pollen denaturing agent.

Suitably, in this embodiment, the pollen denaturing coating forms a substantially continuous layer.

Suitably, the second coating may form a substantially continuous layer.

Suitably, the pollen denaturing coating of the subject embodiment further comprises a tackifier.

The fabric substrate itself may selected or modified to enhance adhesion of pollen spores and increase the ability of the coating to trap and denature pollen allergens. For example surface roughness may be affected by the weave or the nap of the fabric.

The pollen denaturing coating may be surface-modified to increase adhesion of pollen spores and increase the ability of the coating to trap and denature pollen allergens. Thus, the surface of the pollen denaturing coating may be modified to increase its co-efficient of friction and/or to increase its tackiness. This may be achieved by roughening the surface to increase its surface area and its co-efficient of friction. As described hereinabove, the pollen denaturing coating may further include a tackifier.

The coated fabric may further include a fire retardant and/or UV stabiliser as defined in connection with the first aspect of the invention. The fire retardant and/or UV stabiliser may be present in any of the coatings on the fabric substrate or they may form a separate coating on the fabric substrate.

The coated window blind fabric may be used as a substrate in a variety of coverings for an architectural opening. Blinds such as roman blinds, roller blinds, vertical blinds, panel shades and the like typically comprise a blind substrate (e.g. a fabric material), the top edge of which being connected to a top member of the blind, such as a head rail or a roller tube, and the bottom edge being provided with a bottom bar.

According to a further aspect of the invention, there is provided a window blind comprising a coated fabric according to the second aspect of the invention.

Suitably the window blind is selected from a roller blind, a pleated blind, a cellular blind and a roman blind.

The skilled person will appreciate that the features described and defined in connection with the aspects of the invention and the embodiments thereof may be combined in any combination, regardless of whether the specific combination is expressly mentioned herein. Thus, combinations of optional features are within the scope of the invention.

An embodiment of the invention will now be described, by way of example only, with reference to the accompanying drawings in which:
Figure 1 is a cross-sectional view through a coated fabric according to a first embodiment of the invention; and
Figure 2 is a cross-sectional view through a coated fabric according to a second embodiment of the invention.

For the avoidance of doubt, the skilled person will appreciate that in this specification, the terms "up", "down", "front", "rear", "upper", "lower", "width", "above", "below", etc. refer to the orientation of the components of the invention when installed for normal use as shown in the Figures.

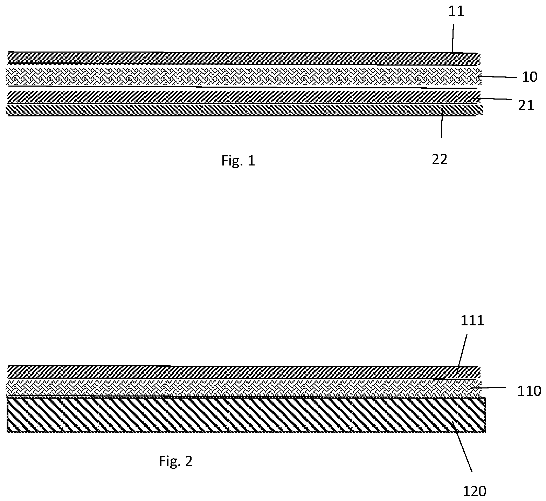

Figure 1 shows a woven polyester fabric 10 which is coated on a first (front) surface with a VAE (vinyl acetate/ethylene copolymer) coating 11 and is coated on a second (rear) surface with a coating comprising a first layer 21 and a second layer 22. The first layer 21 comprises an anti-microbial agent containing a mixture of Bis[1-Hydroxy-2(1H)-pyridinethionato-O,S]-T-4 zinc and 2-(4-thiazolyl)benzimidazole, and a fire retardant containing antimony(III) oxide in a polymer (VAE). The second layer 22 comprises a VAE copolymer carrier containing a pollen denaturing agent in the form of ammonium zirconium carbonate. Both coatings fill the interstices between warp and weft threads to provide a fabric substrate which is substantially devoid of holes or interstices. Pollen particles which contact the second layer 22 are denatured by the zirconium compound which renders the pollen non-allergenic.

Figure 2 shows a similar fabric. In this embodiment, a woven polyester fabric 110 has coated on its first (front) surface a VAE coating 111 which contains a coloured pigment. In contrast to the embodiment described above with reference to Figure 1, the fabric 110 shown in Figure 2 carries on its second (rear) surface a rear coating comprising a single layer 120. The rear coating layer 120 comprises a VAE polymer carrier containing an anti-microbial agent (a mixture of Bis[1-Hydroxy-2(1H)-pyridinethionato-O,S]-T-4 zinc and 2-(4-thiazolyl)benzimidazole), a fire retardant containing antimony(III) oxide, a pollen denaturing agent in the form of ammonium zirconium carbonate and a tackifier in the form of an aqueous dispersion containing an acrylate and a saturated, highly branched C₁₀ monocarboxylic acid. The tackifier dispersed in the polymeric carrier causes the rear coating layer 120 to retain thereon pollen particles which contact it, which are then denatured by the pollen denaturing agent and rendered non-allergenic.

Tests were carried out on the fabric of the embodiment shown in Figure 2 and described above by Worcester University in the UK, a leading centre for pollen research. In the tests, the percentage of grass pollen denatured by the fabric was measured. It was found that at least 50% of the grass pollen particles directed at the fabric surface were denatured.

## Claims

1. A coated window blind fabric comprising a fabric substrate which is coated with a pollen denaturing coating wherein the coating comprises a pollen denaturing agent comprising a basic zirconium carbonate compound, an anti-microbial agent and a polymeric carrier, wherein the pollen denaturing agent is different to the anti-microbial agent.

2. A coated window blind fabric according to Claim 1, wherein the anti-microbial agent comprises a zinc compound or complex, a silver compound or complex and/or a heterocyclic compound including nitrogen and sulphur heteroatoms.

3. A coated window blind fabric according to Claim 2, wherein the anti-microbial agent comprises a zinc compound or complex and a thiazolylbenzimidazole compound.

4. A coated window blind fabric according to any of Claims 1 to 3, wherein the coating further comprises a tackifier.

5. A coated window blind fabric according to Claim 4, wherein the tackifier is a polymeric compound, optionally a polymer formed from a vinyl ester of a branched carboxylic acid and/or vinyl acetate.

6. A coated window blind fabric according to any of Claims 1 to 5, wherein the coating further comprises a fire retardant.

7. A coated window blind fabric according to any of Claims 1 to 6, wherein the polymeric carrier is formed from a polymer which is capable of forming an aqueous solution or an aqueous dispersion.

8. A coated window blind fabric according to any of Claims 1 to 7, wherein the pollen denaturing coating is in the form of a substantially continuous polymeric layer.

9. A coated window blind fabric according to any of Claims 1 to 8, wherein the fabric includes an intermediate coating which comprises a substantially continuous polymeric layer and the intermediate coating is located between the fabric substrate and an outer layer formed from the pollen denaturing coating.

10. A coated window blind fabric according to any of Claims 1 to 8, wherein the fabric is coated on one side with the pollen denaturing coating and is coated on the other side, with a second coating.

11. A coated window blind fabric according to Claim 10 wherein the second coating forms a substantially continuous layer.

12. A coated window blind fabric according to any of Claims 1 to 11, wherein the pollen denaturing coating is surface modified to increase the surface roughness.

13. A window blind comprising a coated window blind fabric according to any of claims 1 to 12.

## Patentansprüche

1. Beschichteter Jalousie-Stoff, der ein Stoffsubstrat umfasst, das mit einem Pollen-Denaturierungsmittel beschichtet ist, wobei die Beschichtung ein Pollen-Denaturierungsmittel umfasst, das eine elementare Zirconiumkarbonat-Verbindung, ein antimikrobielles Mittel und einen polymeren Träger umfasst, wobei das Pollen-Denaturierungsmittel vom antimikrobiellen Mittel verschieden ist.

2. Beschichteter Jalousie-Stoff nach Anspruch 1, wobei das antimikrobielle Mittel eine Zinkverbindung oder Komplex, eine Silberverbindung oder Komplex und/oder eine heterozyklische Verbindung umfasst, die Stickstoff und Schwefel-Heteroatome einschließt.

3. Beschichteter Jalousie-Stoff nach Anspruch 2, wobei das antimikrobielle Mittel eine Zinkverbindung oder Komplex und eine Thiazolylbenzimidazol-Verbindung umfasst.

4. Beschichteter Jalousie-Stoff nach einem der Ansprüche 1 bis 3, wobei die Beschichtung ferner einen Klebrigmacher umfasst.

5. Beschichteter Jalousie-Stoff nach Anspruch 4, wobei der Klebrigmacher eine Polymerverbindung ist, optional ein Polymer ist, das aus einem Vinylester einer verzweigten Carbonsäure und/oder Vinylacetat geformt ist.

6. Beschichteter Jalousie-Stoff nach einem der Ansprüche 1 bis 5, wobei die Beschichtung ferner ein Feuerschutzmittel umfasst.

7. Beschichteter Jalousie-Stoff nach einem der Ansprüche 1 bis 6, wobei der polymere Träger aus einem Polymer geformt ist, das fähig ist, eine wässrige Lösung oder eine wässrige Dispersion zu formen.

8. Beschichteter Jalousie-Stoff nach einem der Ansprüche 1 bis 7, wobei die Pollen-Denaturierungsbeschichtung in Form einer im Wesentlichen kontinuierlichen Polymerschicht ist.

9. Beschichteter Jalousie-Stoff nach einem der Ansprüche 1 bis 8, wobei der Stoff eine Zwischenbeschichtung einschließt, die eine im Wesentlichen kontinuierliche Polymerschicht umfasst und sich die Zwischenbeschichtung zwischen dem Stoffsubstrat und einer äußeren Schicht befindet, die aus der Pollen-Denaturierungsbeschichtung geformt ist.

10. Beschichteter Jalousie-Stoff nach einem der Ansprüche 1 bis 8, wobei der Stoff auf einer Seite mit der Pollen-Denaturierungsbeschichtung beschichtet ist und auf der anderen Seite mit einer zweiten Beschichtung beschichtet ist.

11. Beschichteter Jalousie-Stoff nach Anspruch 10, wobei die zweite Beschichtung eine im Wesentlichen kontinuierliche Schicht formt.

12. Beschichteter Jalousie-Stoff nach einem der Ansprüche 1 bis 11, wobei die Pollen-Denaturierungsbeschichtung oberflächenmodifziert ist, um die Oberflächenrauheit zu erhöhen.

13. Jalousie, die einen beschichteten Jalousie-Stoff nach einem der Ansprüche 1 bis 12 umfasst.

## Revendications

1. Un tissu enduit pour store de fenêtre comprenant un substrat de tissu qui est revêtu d'un revêtement dénaturant le pollen, le revêtement comprenant agent dénaturant le pollen comprenant un composé de zirconium basique, un agent antimicrobien et un support polymérique, l'agent dénaturant le pollen étant différent de l'agent antimicrobien.

2. Un tissu enduit pour store de fenêtre selon la revendication 1, dans lequel l'agent antimicrobien comprend un composé ou un complexe de zinc, un composé ou un complexe d'argent et/ou un composé hétérocyclique comprenant des hétéroatomes d'azote et de soufre.

3. Un tissu enduit pour store de fenêtre selon la revendication 2, dans lequel l'agent antimicrobien comprend un composé ou un complexe de zinc et un composé de thiazolylbenzimidazole.

4. Un tissu enduit pour store de fenêtre selon n'importe laquelle des revendications 1 à 3, dans lequel le revêtement comprend en sus un agent donnant du collant.

5. Un tissu enduit pour store de fenêtre selon la revendication 4, dans lequel l'agent donnant du collant est un composé polymérique, éventuellement un polymère formé à partir d'un ester vinylique d'un acide carboxylique ramifié et/ou d'un acétate de vinyle.

6. Un tissu enduit pour store de fenêtre selon n'importe laquelle des revendications 1 à 5, dans lequel le revêtement comprend en sus un agent ignifuge.

7. Un tissu enduit pour store de fenêtre selon n'importe laquelle des revendications 1 à 6, dans lequel le support polymérique est formé à partir d'un polymère qui est capable de former une solution aqueuse ou une dispersion aqueuse.

8. Un tissu enduit pour store de fenêtre selon n'importe laquelle des revendications 1 à 7, dans lequel le revêtement dénaturant le pollen a la forme d'une couche polymérique sensiblement continue.

9. Un tissu enduit pour store de fenêtre selon n'importe laquelle des revendications 1 à 8, dans lequel le tissu comprend un revêtement intermédiaire qui comprend une couche polymérique sensiblement continue et le revêtement intermédiaire est situé entre le substrat de tissu et une couche extérieure formée par le revêtement dénaturant le pollen.

10. Un tissu enduit pour store de fenêtre selon n'importe laquelle des revendications 1 à 8, dans lequel le tissu est revêtu sur un côté par le revêtement dénaturant le pollen et est revêtu sur l'autre côté par un deuxième revêtement.

11. Un tissu enduit pour store de fenêtre selon la revendication 10 dans lequel le deuxième revêtement forme une couche sensiblement continue.

12. Un tissu enduit pour store de fenêtre selon n'importe laquelle des revendications 1 à 11, dans lequel le revêtement dénaturant le pollen est modifié en surface pour augmenter la rugosité de la surface.

13. Un store de fenêtre comprenant un tissu enduit pour store de fenêtre selon n'importe laquelle des revendications 1 à 12.
